# EUROPEAN PATENT APPLICATION

(11) **EP 4 458 556 A1**
(43) Date of publication of application: **06.11.2024**
(21) Application number: 24166873.0
(22) Date of filing: 27.03.2024
(51) Int. Cl.: B29C 65/02, B29C 65/00, B29C 70/74, B29C 65/10, B29L 31/08, B29L 31/30

(54) **JOINTED UNIT COMPRISING PROTURBERANCES WITH OPTIMIZED GEOMTRY**

(30) Priority: 31.03.2023 IT 202300006393
(71) Applicant: Politecnico Di Torino, 10129 Torino (IT)
(72) Inventor: DE PASQUALE, Giorgio, 10129 Torino (IT)
(74) Representative: Mola, Edoardo

(57) **Abstract**

Jointed unit comprising an element having a matrix of protuberances and another element of pre-preg composite material applied on the matrix of protuberances, wherein each protuberance comprises an upper half-portion and a base half-portion and has a geometry such as to have a ratio between a maximum transverse dimension of the upper half-portion and a height of between 0.8 and 1.4, furthermore this maximum transverse dimension being less than or equal to a maximum transverse dimension of the base of the protuberance, e.g. parallelepiped or truncated pyramid.

## Description

### TECHNICAL FIELD

The present invention related to the field of joints between metal components and composite material components, in particular to a jointed unit comprising protuberances with an optimized geometry.

### PRIOR ART

The connection of parts made of composite materials such as CFRP (carbon fiber reinforced polymer) and metal parts, e.g. titanium alloy, is a widely used practice in many industrial sectors, e.g. aeronautical, automotive, biomechanics, etc., due to the advantages that this solution offers from the point of view of optimizing the mass of the structures without penalizing at the same time the mechanical properties such as stiffness and resistance to breakage. To connect a component made of composite material to a metal component, a design solution is widely used wherein the metal component has protuberances created on a portion of the surface of the component and preferably arranged according to a pattern predefined by the user. The composite material is applied in a layered manner on these protuberances so that each layer adheres to the protuberances and fits between the spaces formed between one protuberance and another, thus defining a connection interface between the metallic material and the composite material. Once the desired number of layers has been applied, the connection interface together with the remaining portion of composite material are cross-linked, e.g. in an autoclave, in order to complete the joint manufacturing process. However, to maximize the mechanical properties of a structure through the use of such joints, various aspects are taken into consideration during the joint design step, including modeling the geometry of the protuberances, identifying those profiles through which the properties can be maximized mechanics of a joint. Therefore, over the years, solutions aimed at optimizing the geometry of the protuberances have been introduced, e.g. based on a shape and/or angular orientation. For example, US2015219133 describes a joint comprising a first component having a connection area on which protrusions with a pyramid profile or a head with a pyramid profile are arranged, and a second component connected to the first by means of such protuberances in the connection area.

### SCOPE AND SUMMARY OF THE INVENTION

The present invention has the aim of identifying design parameters and, on the basis of the latter, improving the performance and in particular the resistance of the joint described in US2015219133, wherein such a purpose is achieved by means of a jointed unit between a metal component and a composite material, preferably CFRP. In particular, to create such a jointed unit, the metal component has a surface portion on which protuberances are made, each with an upper semi-portion and a base semi-portion and a geometry such as to have a ratio between a maximum transversal dimension of the semi -upper portion and a height between 0.8 and 1.4, furthermore such a maximum transverse dimension being less than or equal to a maximum transverse dimension of the base of the protuberance, e.g. parallelepiped or truncated pyramid, and such as to provide improved mechanical properties compared to the use of protuberances with different geometries than those indicated above. In particular, the semi-portions are defined with reference to the height of the protuberance. This defines a substantially squat geometry, which has proven, compared to more tapered geometries, to be particularly resistant to shear loads. According to one aspect of the invention, the protuberances with a rectangular parallelepiped geometry have a profile that extends perpendicularly to the surface of the metallic material, presenting a height greater than the long side and the short side of the base of the rectangular parallelepiped. The protuberances with truncated pyramid geometry, on the other hand, present a profile that extends from the surface of the metal component perpendicularly and in a convergent manner, presenting a major base in contact with the surface of the metal component and a minor base preferably parallel to the major base, with a clearance angle between 70° and 85°. Through the use of these geometries it is possible to obtain optimized mechanical properties of the jointed unit compared to other geometries, in particular with respect to the pyramid geometry, where studies and experimental tests described in this document have proven to be the profile of the protuberance with the lowest mechanical properties achievable with respect to various protuberances with geometries and angular orientations taken into consideration.

### BRIEF DESCRIPTION OF THE FIGURES

The construction and functional characteristics of the jointed unit with optimized geometry can be better understood from the detailed description that follows, wherein reference is made to the attached figures which represent a preferred and non-limiting embodiment, wherein:
- Fig.1 shows an example of a jointed unit between a metal component and a composite material component according to a preferred embodiment of the present invention;
- Fig.2 shows the arrangement of the fibers of the composite material between the jointed unit protuberances inside the channels;
- Fig.3 and 4 show the optimized geometries of the protuberances according to a preferred embodiment of the present invention;
- Fig.5 shows a view of the jointed unit sample used during the simulations and experimental tests;
- Fig.6 shows a schematic view of the protuberance geometries analyzed during the simulations and experimental tests;
- Figs.7-9 show the results obtained of the maximum breaking load obtained from the experimental tests for each jointed unit sample.

### DETAILED DESCRIPTION OF THE INVENTION

During the detailed description that follows, a jointed unit made between a composite material, preferably CFRP (carbon fiber reinforced polymer) and a metallic material, preferably a titanium alloy, is presented.

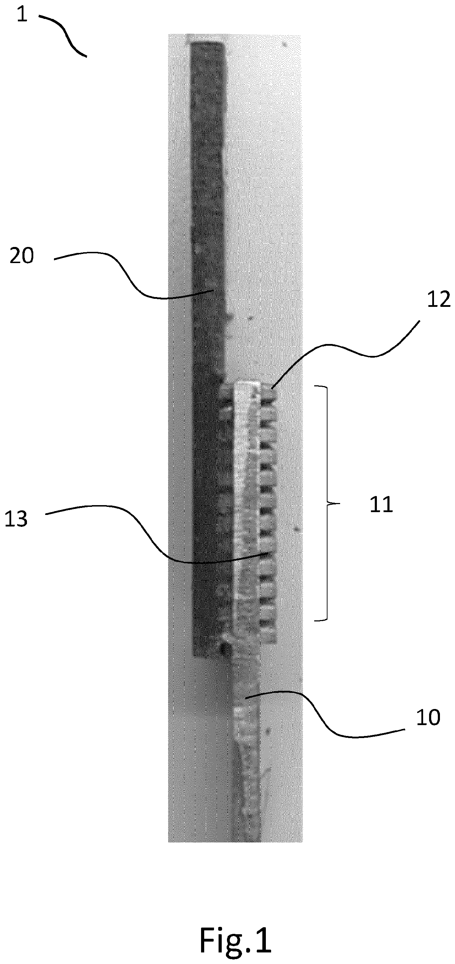

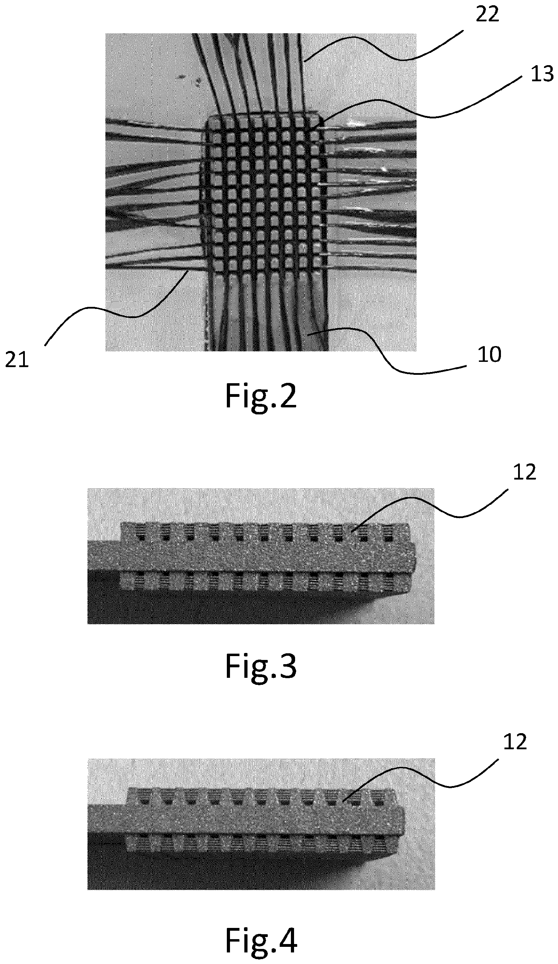

According to a preferred embodiment of the present invention, Fig.1 shows a jointed unit 1 comprising a first component 10, preferably metallic with isotropic properties, which has a connection area 11 from which protuberances 12 extend transversally and preferably perpendicularly to this connection area. For example, the first component is a metallic element e.g. a specimen wherein the connection zone 11 is a portion of surface on one end of the specimen having protuberances extending in a direction opposite to that surface. In order to verify the resistance, the shape of the first component 10 and in particular that of the protuberances 12 can be created using three-dimensional modeling software. Therefore, once the three-dimensional model of the first component 10 with the protuberances has been created, it is possible to create such a component using various production processes such as additive printing, e.g. if the first component is metallic, additive printing techniques known as "Laser Beam" (LB) or "Powder Bed Fusion" (PBF) can be used for microfusion of powders, but alternative processes can also be used such as for the removal of material, e.g. milling, if the geometry to be created, in particular the protuberances 12, do not have undercuts such as to prevent the cutting edge of the machine tool from reaching the area to be milled. Preferably, the protuberances 12 can be arranged on the connection area 11 according to a pattern defined by the user, e.g. a matrix of protuberances created using additive printing. Furthermore, according to this construction configuration, extending from the connection area the protuberances form empty spaces between them creating channels 13. Furthermore, the jointed unit 1 includes a second component 20, preferably made of composite material such as CFRP, rigidly connected to the first component 10 by a cross-linking process of the fibers of such a composite material in the connection area 11 exploiting the construction configuration of the protuberances 12. In particular, to obtain this result, as shown in Fig.2 the second component 20 includes first and second elongated fibrous elements 21, 22, preferably made of composite material such as for example carbon fiber strips, which are arranged in a stratified manner inside the channels 13 so that the first elongated elements 21 are arranged transversely and preferably perpendicular to the second elongated elements 22. Preferably, the first and second elongated elements 21, 22 can respectively have longitudinally opposite ends which are arranged externally to the connection area 11, but a configuration can be provided wherein only one end of the first and/or second elongated elements protrudes from the connection area while the other remains positioned inside the latter. For example, in case the protuberances 12 are made in a matrix configuration, the first elongated elements 21 are each arranged in such a way as to extend along a channel transverse to the columns of protuberances of such a matrix of protuberances, e.g. along a channel formed between two rows of protuberances, while the second elongated elements 22 are each arranged in such a way as to extend along a channel transverse to the rows of protuberances of such a matrix of protuberances, e.g. along a channel formed between two columns of protuberances. Preferably, a layer of second elongated elements 22 is positioned in the channels after a layer of first elongated elements 21 has been arranged. Furthermore, the arrangement of the first and second elongated elements 21, 22 in the respective channels 13 can be accompanied by the deposition of an epoxy resin to impregnate the fibers of the composite material to promote adhesion between the layers and at the same time favor the cross-linking process. Furthermore, to allow a more homogeneous diffusion of the resin inside the channels, a counter-mold can be created shaped so as to have projections that are inserted into the channels 13 to exert pressure on the layers of stratified fibers of the composite material. Therefore, once the desired layering level has been reached, e.g. equal to the height of the protuberances 12, the stratification of the composite material continues in such a way as to create the shape of the second component 20. Once the stratification is finished, the fibers of the composite material are made cross-linked, e.g. in an autoclave, in such a way as to rigidly connect the composite material fibers to the protuberances and form the jointed unit between the metal component and the composite material component. According to one aspect of the present invention, the inventors have identified that some geometries of protuberances 12, with the same dimensions of the base and height, provide the jointed unit with improved mechanical properties compared to other geometries. In particular, following FEM simulations and experimental tests, e.g. through tensile tests, conducted on jointed units including protuberances with different geometries, the best mechanical properties were obtained through the use of a rectangular parallelepiped or truncated pyramid geometry, while the worst through the use of pyramid geometries or with head extremities of pyramid. In particular, as shown in Fig. 3 and 4, the protuberances 12 with a rectangular parallelepiped geometry present a profile that extends perpendicularly to the surface of the connection area 11, presenting a height greater than the long side and the short side of the base of the parallelepiped rectangle. The protuberances 12 with truncated pyramid geometry instead have a profile that extends from the surface of the connection area 11 perpendicularly and in a convergent manner, having a first base in contact with the surface of the connection area and a second base longitudinally opposite and preferably parallel to the first. During the following description, the results of the experimental validations are presented to demonstrate that the rectangular parallelepiped and truncated pyramid geometries provide better mechanical properties than the other geometries taken into consideration.

### EXPERIMENTAL VALIDATION

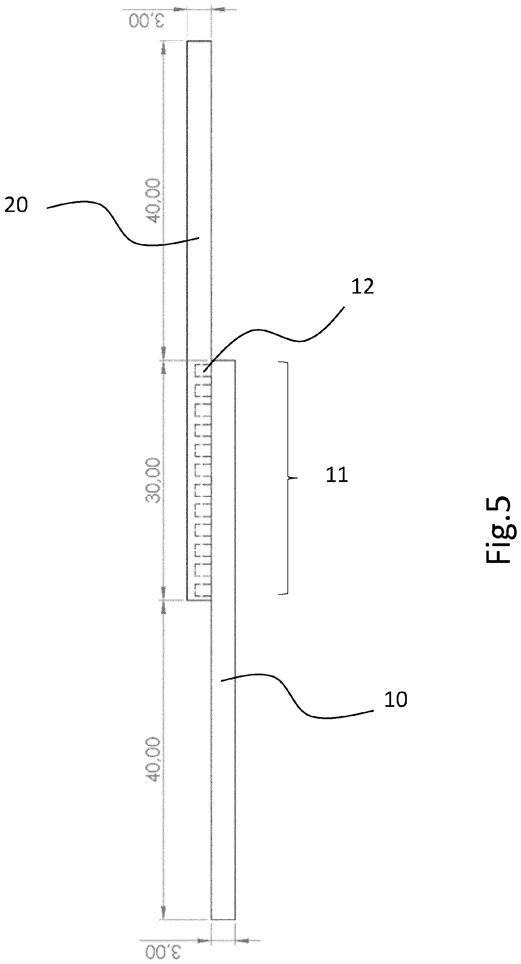

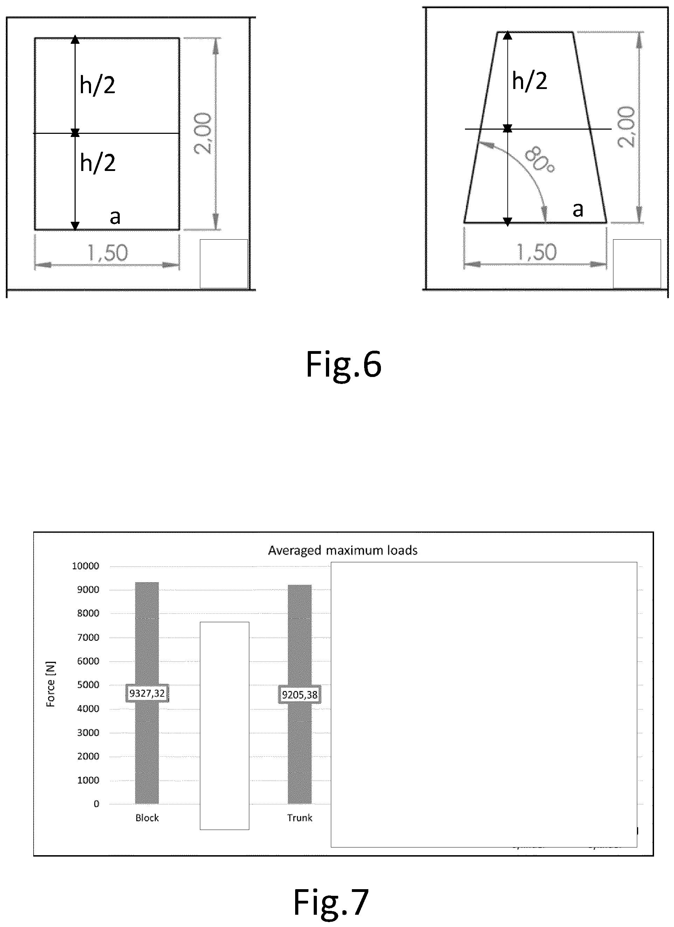

For the experimental tests, CFRP-metal jointed unit were made according to the sample configuration of the ISO 22841 standard for tensile tests to evaluate the jointed unit under tensile shear. In particular, the jointed unit includes a first metallic component in In625 and a second component in CFRP rigidly connected to each other. The dimensions of the jointed unit are 110x20x6 mm. The dimensions of the connection area are 70x20x3 mm. The jointed unit area is 30x20 mm2. The overall dimensions of the sample are shown in Fig. 5. As shown in Fig. 6, different geometries of protuberances 12 were made: rectangular parallelepiped, truncated pyramid and others not illustrated e.g. pyramid. The dimensions of all protuberances are shown in Fig.6. Through half the height h it is possible to identify a lower semi-portion and an upper semi-portion via a plane parallel to the base. In both forms, the base is square with side a. According to the invention, a maximum transverse dimension e.g. in the specific case a diagonal of the value of a√2 of the upper half-portion has a ratio between 0.8 and 1.4 with the height h. As visible from the images, the matrix of protuberances 12 has a module wherein the projections themselves are spaced apart from each other by a. Thanks to the solidity e.g. given that these are substantially squat protuberances, it is possible to reduce the concentration per unit of surface area in a ratio with respect to the total volume occupied by the matrix of between 0.15 and 0.35. In particular, the total volume of the matrix is a polygon with a rectangular base, if the matrix is rectangular, which circumscribes all the protuberances 12 and has the same height as the protuberances themselves, which are all the same height. Such a volume is in the denominator and the overall volume of all the protuberances 12 contained in the volume is in the numerator. It is also possible to calculate the ratio by identifying a repetitive module of the matrix, this module including a protuberance 12 and an overall volume which, in fact, is repeated throughout the matrix.

In all jointed unit configurations, the bumps are arranged in a 12x8 matrix configuration on the connection area of the first component. The production process of the joint samples includes a first phase, in which the metal component is created through an additive printing process of LB-PBF, and a second phase in which the metal component is connected to the CFRP through the application of fibers of carbon in the channels between the protuberances and then cross-linked. In particular, the metal components are manufactured using the Renishaw AM 500M machine with Inconel 625. Apart from the rectangular parallelepiped and truncated pyramid geometries, all protuberances are generated without support structures during the growth of the parts, being able to support themselves. The process parameters are reported in Tab. 1, while Fig.7 shows the samples in their constructed configuration. After the additive printing process, the samples are mechanically removed from the additive printing machine platform by wire cutting, and the temporary supports are removed by sandblasting. Sandblasting is also applied to all sample surfaces to improve the finish. Overall, six samples per geometry were produced.

**Tab.1**

| Layer | Hatch | Edge |
|---|---|---|
| Layer thickness: 40 µm | Power: 190 W | Number of edges: 1 |
| | Hatch distance: 110 µm | Power: 190 W |
| | Point distance: 90 µm | Point Distance: 90 µm |
| | Exposure time: 100 µs | Exposure time: 100 µs |
| | Hatch offset: -20 µm | |

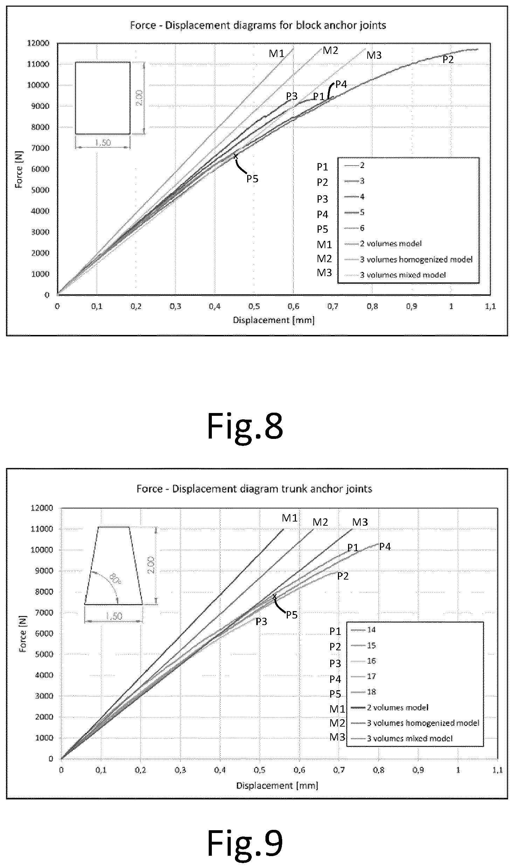

The second step of the jointed unit manufacturing process is the generation of the CFRP side. The forming process comprises the simultaneous co-polymerization of the CFRP with the metal protuberances. Carbon fibers are placed in the channels between the protuberances together with a two-component epoxy resin. Lamination requires the preliminary fabrication of a counter mold through which stacking the layers and guide the flow of resin where necessary. Polyvinyl alcohol release agent is used on exposed surfaces to facilitate sample removal from the die. The first forming operation involves positioning the carbon fibers in the channels of the protuberances in a layered manner. Next, the twisted fiber layers are stacked and impregnated with epoxy resin until the CFRP laminate thickness is 3 mm (i.e. the same thickness as the metal part of the jointed unit). The resin polymerization process lasts 24 hours at room temperature and pressure. When the CFRP cross-linking process is completed, the contours of the sample are refined to achieve nominal dimensions. Fig.6 shows one of the samples for each protuberance geometry. Once the jointed unit samples are ready, experimental tests are conducted to evaluate the static force-displacement response of the jointed unit to link such a property to the corresponding protuberance. Furthermore, force-displacement curves are used to validate the predictions of different three-dimensional models made for each protuberance geometry. In particular, the simulation of the static structural behavior of the jointed unit is conducted using three different models with different levels of complexity, namely a "2-volume model", a "mixed 3-volume model" and a "homogenized 3-volume model". The "2-volume model" reproduces the nominal geometry of the two joined materials, including protrusions in 3D, wherein two volumes are used to reproduce the two materials (In625 and CFRP). The "3-volume mixed model" uses the mixing rule to define a third material which is a medium representing the mechanical properties of the intermediate region where the protuberances are engaged in the CFRP. The actual geometry of the protuberances is not reproduced by this model. The "3-volume homogenized model" begins with the identification of the RVE (representative volume element). In the present case, the RVE is associated with the single metal protuberance and the surrounding composite. The metal part is defined with isotropic properties. The composite material is defined with the orthotropic properties of the fiber-matrix composition. Periodic boundary conditions are applied to the RVE in order to determine the average loads through which the equivalent stiffness matrix is evaluated. Finally, the equivalent mechanical properties in terms of elastic and shear modulus and Poisson's ratios are extracted for the orthotropic medium. The model constraints configuration is defined to faithfully reproduce the experimental setup described below. Once the experimental tests have been conducted, the jointed unit damage observed during the tests is used to investigate the failure mode corresponding to the different geometries of the protuberances. Tensile tests were performed on the samples produced. When the samples are subjected to tensile loading, the jointed unit is subjected to shear loading. To perform the tensile tests, the Instron 8801 servo-hydraulic machine (max load 100 kN) is used. To avoid sample bending caused by misalignment between the two anchor points, a spacer is used to restore nominal alignment. Tests are performed in displacement control mode at a speed of 1 mm/min, while the tensile force is stored. The static force-displacement curves associated with the different metal protuberances are shown in the diagrams of Fig. 8 and 9. The stiffness values calculated by the different models are shown in Tab.2 below:

**Tab.2**

| | ***k [N*/*mm²]*** | | | | ***Percent error* [%]** | | |
|---|---|---|---|---|---|---|---|
| ***Anchor geometry*** | ***2-volumes model*** | ***3-volumes mixed model*** | ***3-volumes homogenized model*** | ***Experimental (least square)*** | ***2-volumes model*** | ***3-volumes mixed model*** | ***3-volumes homogenized model*** |
| ***Block*** | 19567.94 | 15006.00 | 17512.89 | 16803.27 | 13.13 | -11.98 | 4.05 |
| ***Trunk*** | 19641.74 | 15021.33 | 17329.58 | 15868.58 | 19.21 | -5.64 | 8.43 |

The experimental stiffness is averaged between the interpolated curves with the least squares method applied on the experimental data.

The comparison of the stiffness values reported in Tab.2 shows that, for the first three geometries of protuberances considered (rectangular parallelepiped and truncated pyramid), both the 3-volume homogenized models and the 3-volume mixed models give the best agreement with the experimental data (expressed using the least squares method). In fact, the 2-volume model is always excessively rigid to correctly reproduce the correct force-displacement diagram. The homogenized 3-volume model offers the best representativeness for both the rectangular parallelepiped protuberances and good representativeness for the truncated pyramids. Percent force errors in specimens with rectangular parallelepiped and truncated pyramid jointed units were examined. In the 0-2mm displacement range, the 2-volume model gives an error range of -10% to 30%, the 3-volume mixed model -30% to 0%, and the 3-volume homogenized model - 10% to 10%. The 2-volume model provides small errors (-10% to 10%, except sample 24) for downward-oriented cuboids. Due to the large fluctuations in the displacement between 0 and 0.1 mm, the error values are overestimated. Excluding this range, the maximum error for the 3-volume mixed model is -20%, while for the 3-volume homogenized model it is +20%. In the displacement range of 0.2 to 0.5 mm, the mixed model provides the lowest error range of -10% to 10%.

The maximum load achieved in the experimental tests is shown in Fig. 7. The maximum load corresponds to the failure of the jointed unit specimen or the onset of failure. The jointed units with rectangular parallelepiped protuberances show the highest maximum load (9327.32 N) although the experimental stiffness is not the highest. The behavior of the jointed units with truncated pyramid protuberances is comparable to that of rectangular parallelepipeds, with slight differences regarding the lower maximum load and the stiffness obtained. The failure modes of these jointed units are the same: the fibers break in the CFRP-metal connection area, leaving the protuberances intact. Little local delamination (cohesive failure) is observed between the layers above the jointed unit area. As demonstrated by experimental tests, protuberances with parallelepiped and truncated pyramid geometry provide the best mechanical properties. The cohesive failure of the partial adhesive failure, with exposure of the carbon fibers, demonstrates the good engagement of the carbon fibers with the metal surface. The orientation of the protuberances aligned with or against the direction of the load shows no significant changes in the final performance of the jointed unit. The geometry of the pyramid protuberance on the other hand shows the lowest strength and complete adhesive failure of the jointed unit, not allowing full loading of the fibers before separation of the materials.

Comparative tests have shown that other geometries e.g. pyramid-shaped, provided inferior performance.

The jointed unit of the invention is preferably used for the creation of primary aeronautical structures e.g. wings and/or vertical aeronautical stabilizers and/or aeronautical tail rudders.

The jointed unit of the invention is also used in boat fins, including foils.

The jointed unit of the invention is also used on board a turbine blade, e.g. wind power.

The jointed unit of the invention is also used on board wheeled land vehicles e.g. cars, motorcycles, to create devices with lift/downforce aerofoils.

## Claims

1. Jointed unit comprising an element having a matrix of protuberances (12) and another element of pre-preg composite material applied on the matrix of protuberances, wherein each protuberance comprises an upper half-portion and a base half-portion and has a geometry such as to have a ratio between a maximum transverse dimension of the upper half-portion and a height (h) of between 0.8 and 1.4, furthermore this maximum transverse dimension being less than or equal to a maximum transverse dimension of the base of the protuberance, e.g. parallelepiped or truncated pyramid.

2. Jointed unit according to claim 1, wherein a ratio between the volumes of the protuberances (12) of the matrix and the volume of the matrix is between 0.15 and 0.35.

3. Jointed unit according to one of the preceding claims, wherein the element with the matrix is made by means of an additive technique for powder casting.

4. Jointed unit according to any of the preceding claims, comprising fibrous elements (21, 22) additional to those of the pre-preg, preferably of carbon fiber, and extended beyond the matrix are arranged between the protuberances (12) and on corresponding base of channels delimited by the protuberances (12) so as to be interposed between the pre-preg, said additional fibers being impregnated with curing resin together with the pre-preg.

5. Jointed unit according to claim 4, wherein the fibrous elements (21, 22) are crossed in the matrix.

6. Aeronautic primary structure comprising a jointed unit according to claims 1 to 5, preferably an aeronautical tail aileron or rudder or an aeronautical vertical stabilizer.

7. Fin, for example foil, for a boat comprising a jointed unit according to any one of claims 1 to 5.

8. Turbine blade preferably wind turbine blade comprising a jointed unit according to any of claims 1 to 5.

9. Lift/ downforce device for a wheeled land vehicle comprising a jointed unit according to any of claims 1 to 5.
